# EUROPÄISCHE PATENTANMELDUNG

(11) **EP 2 165 816 A2**
(43) Veröffentlichungstag der Anmeldung: **24.03.2010**
(21) Anmeldenummer: 09450170.7
(22) Anmeldetag: 11.09.2009
(51) Int. Cl.: B29B 9/06

(54) **Vorrichtung zum Granulieren von Kunststoff**

(30) Priorität: 18.09.2008 AT 14502008
(71) Anmelder: Econ GmbH, 4616 Weißkirchen/Traun (AT)
(72) Erfinder: Pirker, Dr. Stefan, 4060 Leonding (AT); Gittler, Dr. Philipp, 1130 Wien (AT)
(74) Vertreter: Hübscher, Helmut

(57) **Zusammenfassung**

Es wird eine Vorrichtung zum Granulieren von Kunststoff mit einem Granulierkopf, der eine Lochscheibe (2) zum Austritt von Kunststoffsträngen und einen zur Lochscheibe (2) koaxialen Rotor (5) mit Granuliermessern (4) zum Schneiden der aus der Lochplatte (2) austretenden Kunststoffstränge umfasst, und mit einem Gehäuse (1) für den Granulierkopf beschrieben, das an eine Ableitung (11) und über eine Zulaufkammer (8) an eine Zuleitung (10) für ein das Granulat aufnehmendes Förder- und Kühlmittel, vorzugsweise eine Kühlflüssigkeit, angeschlossen ist. Um vorteilhafte Förderbedingungen für das Granulat zu schaffen, wird vorgeschlagen, dass das Gehäuse (1) eine von der Zulaufkammer (8) getrennte Ablaufkammer (9) für das Förder- und Kühlmittel bildet, dass der zwischen der Zulaufkammer (8) und der Ablaufkammer (9) angeordnete, die Granuliermesser (4) tragende Rotor (5) mit seiner von den Granuliermessern (4) abgewandten Rückseite an die Zulaufkammer (8) anschließt und innerhalb der kreisförmigen Messeranordnung mit axialen Öffnungen (14) für den Durchtritt des Förder- und Kühlmittels von der Zulaufkammer (8) in die Ablaufkammer (9) versehen ist.

## Beschreibung

Die Erfindung bezieht sich auf eine Vorrichtung zum Granulieren von Kunststoff mit einem Granulierkopf, der eine Lochscheibe zum Austritt von Kunststoffsträngen und einen zur Lochscheibe koaxialen Rotor mit Granuliermessern zum Schneiden der aus der Lochplatte austretenden Kunststoffstränge umfasst, und mit einem Gehäuse für den Granulierkopf, das an eine Ableitung und über eine Zulaufkammer an eine Zuleitung für ein das Granulat aufnehmendes Förder- und Kühlmittel, vorzugsweise eine Kühlflüssigkeit, angeschlossen ist.

Zum Granulieren von Kunststoffen wird üblicherweise eine Kunststoffschmelze in Form von Kunststoffsträngen durch eine Lochplatte gedrückt, die mit einem zur Lochscheibe koaxialen, mit Granuliermessern bestückten Rotor zusammenwirkt, sodass die aus der Lochplatte in eine Kühlflüssigkeit, vorzugsweise Wasser, austretenden Kunststoffstränge geschnitten werden. Die Kühlflüssigkeit sorgt dabei einerseits für eine Erstarrung des Kunststoffgranulats und anderseits für seine Weiterförderung. Da das den Granulierkopf aus Lochscheibe und Rotor aufnehmende Gehäuse im Allgemeinen von der Kühlflüssigkeit vertikal durchströmt wird, während die Rotorwelle quer zur Strömungsrichtung verläuft, besteht die Gefahr, dass das Granulat schwerkraftbedingt in den von den kreisförmig angeordneten Messern umschlossenen Spalt zwischen der Lochplatte und dem Rotor gelangt und dort verbleibt, was zu Störungen der Granulierung führt. Vergleichbare Schwierigkeiten können sich auch beim Einsatz von Luft als Förder- und Kühlmittel einstellen.

Es ist zwar bereits bekannt (DE 197 20 722 A1), das Förder- und Kühlmittel axial dem den Rotor aufnehmenden Gehäuse zuzuführen, doch bleiben die geschilderten Schwierigkeiten bestehen, weil das Förder- und Kühlmittel über eine koaxiale Zulaufkammer auf der den Granuliermessern abgekehrten Seite des Rotors in das Gehäuse eingeleitet wird, sodass das Förder- und Kühlmittel über den Rotor radial nach außen verdrängt wird und keinen Fördereinfluss auf das sich innerhalb des Messerkreises ansammelndes Granulat ausüben kann.

Der Erfindung liegt somit die Aufgabe zugrunde, eine Vorrichtung der eingangs geschilderten Art zum Granulieren von Kunststoff so auszugestalten, dass für eine unbehinderte Weiterförderung des Granulats durch das Förder-und Kühlmitttel und damit für eine ungestörte Granulierung unabhängig von der Einbaulage des Rotors gesorgt wird.

Die Erfindung löst die gestellte Aufgabe dadurch, dass das Gehäuse eine von der Zulaufkammer getrennte Ablaufkammer für das Förder- und Kühlmittel bildet, dass der zwischen der Zulaufkammer und der Ablaufkammer angeordnete, die Granuliermesser tragende Rotor mit seiner von den Granuliermessern abgewandten Rückseite an die Zulaufkammer anschließt und innerhalb der kreisförmigen Messeranordnung mit axialen Öffnungen für den Durchtritt des Förder- und Kühlmittels von der Zulaufkammer in die Ablaufkammer versehen ist.

Da zufolge dieser Maßnahmen das Förder- und Kühlmittel gezwungen wird, aus der Zulaufkammer durch den Rotor in den von den Granuliermessern umschlossenen Spaltbereich zwischen Lochplatte und Rotor zu strömen, ergibt sich eine radial nach außen gerichtete Förder- und Kühlmittelströmung zwischen den Granuliermessern, sodass das Granulat sicher vom Rotor radial nach außen in die Auslaufkammer und von dort zum Ablauf gefördert wird. Diese Strömungsausbildung stellt somit einen störungsfreien Granulierungsvorgang sicher.

Obwohl die Strömungsverbindung zwischen der Zulaufkammer des Gehäuses und dem Rotor für die Strömungsverteilung auf der Seite der Ablaufkammer eine untergeordnete Rolle spielt, ergeben sich besonders einfache Konstruktionsverhältnisse, wenn der Rotor auf der der Zulaufkammer zugekehrten Rückseite einen koaxialen Mantel aufweist, der eine gegen die Zulaufkammer offene Ringkammer für die Führung des Förder- und Kühlmittels bildet, sodass das Förder- und Kühlmittel mit einer ausgeprägten axialen Strömungskomponente zum Rotor gefördert wird. Um keine Abdichtung des sich mit dem Rotor drehenden Mantels gegenüber der Zulaufkammer vorsehen zu müssen, kann der Mantel mit Spiel durch eine Öffnung einer zur Rotorwelle senkrechten Trennwand zwischen der Zu- und der Ablaufkammer in die Zulaufkammer ragen. Das Spiel des Mantels des Rotors innerhalb der Öffnung in der Trennwand zwischen der Zu- und der Ablaufkammer bringt nicht nur einfache Konstruktionsverhältnisse mit sich, sondern bedingt auch einen Strömungsdurchtritt von der Zu- zur Ablaufkammer außerhalb des Rotors, was den Vorteil mit sich bringt, dass sich sonst ergebende Strömungstoträume innerhalb der Ablaufkammer im Anschluss an den Rotor gespült werden. Diese Spülung verhindert eine Anlagerung von Granulatteilchen in diesen Toträumen.

Üblicherweise werden die Granuliermesser mit einem vorgegebenen Druck an die Lochplatte angestellt. Da bei einer Messerabnützung der Spalt zwischen der Lochplatte und dem in axialer Richtung entsprechend druckbeaufschlagten Rotor kleiner wird, erhöht sich der Strömungswiderstand für das durch den Rotor strömende Förder- und Kühlmittel, was bei einem Spiel zwischen dem Mantel des Rotors und der Öffnung in der Trennwand zwischen der Zu- und der Ablaufkammer zu einer vermehrten Förder- und Kühlmittelströmung außerhalb des Rotors führt. Damit dadurch bedingte Einflüsse auf die radiale Granulatförderung aus dem Bereich des Granulierkopfes vermieden werden, kann sich der Mantel zumindest im Bereich seines Durchtritts durch die Öffnung der Trennwand konisch gegen den Rotor hin verjüngen, sodass sich mit der Verringerung des Strömungsquerschnitts im Bereich des Spalts zwischen Lochplatte und Rotor auch der durch das Spiel des Mantels innerhalb der Trennwandöffnung gebildete Strömungsquerschnitt verringert und demnach die Strömungsaufteilung ausreichend gleichbleibt.

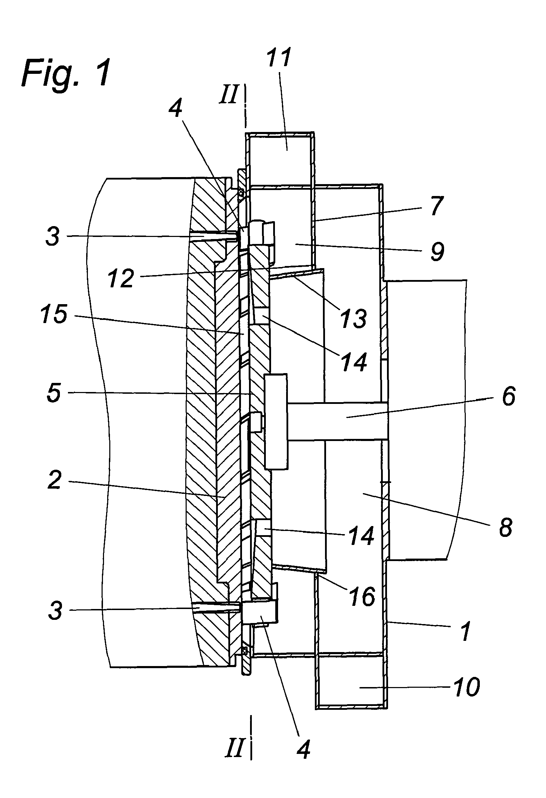

In der Zeichnung ist der Erfindungsgegenstand beispielsweise dargestellt. Es zeigen
- Fig. 1: eine erfindungsgemäße Vorrichtung zum Granulieren von Kunststoff in einem schematischen Längsschnitt und

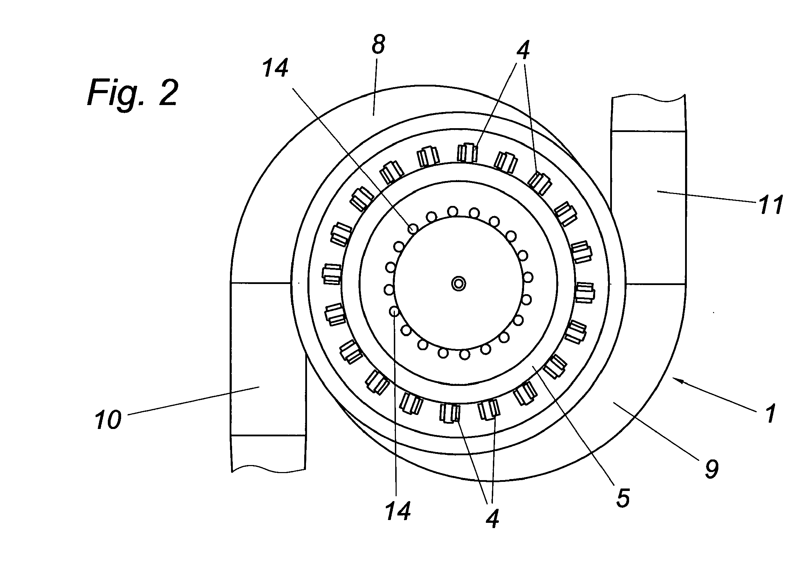

- Fig. 2: einen Schnitt nach der Linie II-II der Fig. 1 in einem kleineren Maßstab.

Die dargestellte Vorrichtung weist ein Gehäuse 1 auf, das auf einer Stirnseite durch eine Lochplatte 2 abgeschlossen ist, in deren Bereich Austrittsdüsen 3 münden, durch die eine Kunststoffschmelze in entsprechend vielen Strängen austritt. Die im Bereich jeder Austrittsdüse 3 austretenden Kunststoffstränge werden mit Hilfe von Granuliermessern 4 zu einem Kunststoffgranulat geschnitten, die auf einem zur Lochplatte 2 koaxialen Rotor 5 angeordnet sind. Die Antriebswelle 6 für den Rotor 5 ist in herkömmlicher Weise durch die gegenüberliegende Stirnwand des Gehäuses 1 geführt.

Im Gegensatz zu herkömmlichen Vorrichtungen dieser Art, wird das Gehäuse 1 durch eine zur Rotorwelle 6 senkrechte Trennwand 7 in eine Zulaufkammer 8 und in eine Ablaufkammer 9 unterteilt. Diese Kammern 8 und 9 sind an einen Zulauf 10 und an einen Ablauf 11 für eine Kühlflüssigkeit, üblicherweise Wasser, angeschlossen. Die Trennwand 7 bildet eine zur Rotorwelle 6 koaxiale Öffnung 12, durch die ein am Rotor 5 befestigter, zur Rotorwelle 6 koaxialer Mantel 13 mit Spiel ragt. Der in die Ablaufkammer 9 ragende Rotor 5 ist somit auf seiner von den Granuliermessern 4 abgewandten Rückseite über den Mantel 13 an die Zulaufkammer 8 angeschlossen. Da der Rotor 5 innerhalb eines von den kreisförmig angeordneten Granuliermessern 4 umschlossenen Bereichs axiale Öffnungen 14 für den Strömungsdurchtritt der Kühlflüssigkeit von der Zulaufkammer 8 zur Ablaufkammer 9 aufweist, strömt die Kühlflüssigkeit durch den Rotor 5 in den Spalt 15 zwischen der Lochplatte 2 und dem Rotor 5 und von diesem Spalt 15 zwischen den einzelnen Granuliermessen 4 hindurch radial in die Ablaufkammer 9.

Durch diese Hauptströmung der Kühlflüssigkeit wird das geschnittene Granulat von der Kühlflüssigkeit sicher radial nach außen vom Rotor 5 in die Ablaufkammer 9 ausgetragen. Der sich durch das Spiel des Mantels 13 innerhalb der Öffnung 12 in der Trennwand 7 ergebende Ringspalt 16 bedingt eine den Rotor 5 umgehende Nebenströmung für die Kühlflüssigkeit mit dem Vorteil, dass nicht nur auf eine Abdichtung des rotierenden Mantels 13 gegenüber der Trennwand 7 verzichtet werden kann, sondern auch die Ablaufkammer 9 in Bereichen gespült wird, die sonst als Strömungstoträume zur Anlagerung von Granulatteilchen neigen. Um hinsichtlich der Kühlwasserzufuhr zum Rotor 5 und der Kühlwasserableitung vom Rotor 5 vorteilhafte Strömungsbedingungen für die Kühlflüssigkeit innerhalb der Zu- und Ablaufkammer 8, 9 zu erreichen, bilden diese Kammern 8, 9 sich spiralartig verjüngende bzw. erweitende Führungskanäle für die Kühlflüssigkeit, was jedoch nicht zwingend ist, insbesondere für die Zulaufkammer 8.

Der Rotor 5 wird üblicherweise zur Messeranstellung axial beaufschlagt. Diese axiale Rotorbeaufschlagung kann aufgrund der Anordnung des Rotors 5 zwischen der Zu- und der Ablaufkammer 8, 9 über den Förderdruck der zulaufenden Kühlflüssigkeit zumindest unterstützt werden. Mit der Messerabnützung und der damit verbundenen automatischen Messernachstellung zufolge der axialen Rotorbeaufschlagung wird der Spalt 15 zwischen der Lochplatte 2 und dem Rotor 5 kleiner. Damit der dadurch bedingte erhöhte Strömungswiderstand nicht zu einer Verlagerung der Strömungsaufteilung zwischen dem Hauptstrom durch den Rotor 5 und dem Nebenstrom durch den Ringspalt 16 außerhalb des Rotors 5 führt, ist der Mantel 13 zumindest im Bereich der Öffnung 12 in der Trennwand 7 konisch ausgebildet, und zwar im Sinne einer Verjüngung gegen den Rotor 5 hin, sodass bei einer axialen Verlagerung des Rotors 5 gegen die Lochplatte 2 nicht nur der Spalt 15 zwischen der Lochplatte 2 und dem Rotor 5, sondern auch der Ringspalt 16 zwischen dem Mantel 13 und der Öffnung 12 in der Trennwand 7 mit dem Erfolg verkleinert wird, dass die Strömungsaufteilung angenähert gleichbleibt.

Wie aus der Zeichnung unmittelbar hervorgeht, können die beschriebenen Wirkungen auch durch ein gasförmiges Förder- und Kühlmittel erreicht werden, das innerhalb des Messerkranzes durch den Messerkopf strömt. Obwohl sich besonders vorteilhafte Förder- und Kühlbedingungen mit einer Kühlflüssigkeit ergeben, kann die Erfindung auch bei einem gasförmigen Förder-und Kühlmittel eingesetzt werden.

## Patentansprüche

1. Vorrichtung zum Granulieren von Kunststoff mit einem Granulierkopf, der eine Lochscheibe (2) zum Austritt von Kunststoffsträngen und einen zur Lochscheibe (2) koaxialen Rotor (5) mit Granuliermessern (4) zum Schneiden der aus der Lochplatte (2) austretenden Kunststoffstränge umfasst, und mit einem Gehäuse (1) für den Granulierkopf, das an eine Ableitung (11) und über eine Zulaufkammer (8) an eine Zuleitung (10) für ein das Granulat aufnehmendes Förder- und Kühlmittel, vorzugsweise eine Kühlflüssigkeit, angeschlossen ist, **dadurch gekennzeichnet, dass** das Gehäuse (1) eine von der Zulaufkammer (8) getrennte Ablaufkammer (9) für das Förder- und Kühlmittel bildet, dass der zwischen der Zulaufkammer (8) und der Ablaufkammer (9) angeordnete, die Granuliermesser (4) tragende Rotor (5) mit seiner von den Granuliermessern (4) abgewandten Rückseite an die Zulaufkammer (8) anschließt und innerhalb der kreisförmigen Messeranordnung mit axialen Öffnungen (14) für den Durchtritt des Förder- und Kühlmittels von der Zulaufkammer (8) in die Ablaufkammer (9) versehen ist.

2. Vorrichtung nach Anspruch 1, **dadurch gekennzeichnet, dass** der Rotor (5) auf der der Zulaufkammer (4) zugekehrten Rückseite einen koaxialen Mantel (13) aufweist, der eine gegen die Zulaufkammer (8) offene Ringkammer für die Führung des Förder- und Kühlmittels bildet.

3. Vorrichtung nach Anspruch 2, **dadurch gekennzeichnet, dass** der Mantel (13) mit Spiel durch eine Öffnung (12) einer zur Rotorwelle (6) senkrechten Trennwand (7) zwischen der Zu- und der Ablaufkammer (8, 9) in die Zulaufkammer (8) ragt.

4. Vorrichtung nach Anspruch 3, **dadurch gekennzeichnet, dass** sich der Mantel (13) zumindest im Bereich seines Durchtritts durch die Öffnung (12) der Trennwand (7) konisch gegen den Rotor (5) hin verjüngt.
